# EUROPÄISCHE PATENTSCHRIFT

(11) **EP 3 489 583 B1**
(45) Veröffentlichungstag und Bekanntmachung des Hinweises auf die Patenterteilung: **09.09.2020**
(21) Anmeldenummer: 18200649.4
(22) Anmeldetag: 16.10.2018
(51) Int. Cl.: F24C 7/08, A47J 36/32, G08C 17/02

(54) **VERFAHREN ZUR STEUERUNG EINES KOCHGERÄTS MIT EINEM EXTERNEN STEUERGERÄT, KOCHGERÄT UND SYSTEM**
METHOD FOR CONTROLLING A COOKING APPLIANCE WITH AN EXTERNAL CONTROL DEVICE, COOKING DEVICE AND SYSTEM
PROCÉDÉ DE COMMANDE D'UN APPAREIL DE CUISSON DOTÉ D'UN APPAREIL DE COMMANDE EXTERNE, APPAREIL DE CUISSON ET SYSTÈME

(30) Priorität: 22.11.2017 DE 102017220815
(43) Veröffentlichungstag der Anmeldung: 29.05.2019
(73) Patentinhaber: E.G.O. Elektro-Gerätebau GmbH, 75038 Oberderdingen (DE)
(72) Erfinder: Egenter, Christian, 75015 Bretten (DE); Frank, Marcus, 75056 Sulzfeld (DE); Schaumann, Uwe, 75038 Oberderdingen (DE); Schmidt, Kay, 75038 Oberderdingen-Flehingen (DE)
(74) Vertreter: Patentanwälte Ruff, Wilhelm, Beier, Dauster & Partner mbB

(56) Entgegenhaltungen:
- EP-A1- 3 236 709
- WO-A1-2017/143186
- DE-A1-102009 000 652
- DE-A1-102011 085 526
- DE-A1-102012 205 621
- US-A1- 2016 174 748
- US-A1- 2017 135 159

## Beschreibung

### Anwendungsgebiet und Stand der Technik

Die Erfindung betrifft ein Verfahren zur Steuerung eines Kochgeräts, insbesondere eines Kochfelds oder eines Backofens, mit einem externen Steuergerät. Des Weiteren betrifft die Erfindung ein System mit einem solchen Kochgerät und einem externen Steuergerät.

Die Vernetzung von elektrischen Geräten, insbesondere auch Kochgeräten, im privaten Haushalt nimmt immer weiter zu. Dabei sollen vor allem mehr Möglichkeiten geschaffen werden, Kochgeräte mit einem externen Steuergerät zu steuern, beispielsweise mit einer speziellen externen Steuerung einerseits oder einem mobilen Endgerät andererseits. So kann es unter Umständen auch ermöglicht werden, neue Funktionen wie Programmabläufe odgl. mittels des externen Steuergeräts zu implementieren, welche zuvor noch nicht verfügbar waren in dem Kochgerät.

Aus der DE 19802558 A1 ist es beispielsweise bekannt, ein Kochfeld als Kochgerät mit einer externen Steuerung als speziellem Steuergerät zu bedienen.

Aus der US 2017/0135159 A1 ist ein Kochgerät bekannt, das mit einem Smartphone oder einem Tablet-Computer bedient werden kann. Darin ist auch offenbart, dass das Smartphone oder der Tablet-Computer als Automatik-Steuergerät mit einem Automatikprogramm oder als Manuell-Steuergerät mit manuellen Steuerbefehlen arbeiten kann. Dabei wird jeder automatisch vorgegebene und jeder manuell vorgegebene Steuerbefehl von dem Kochgerät ausgeführt.

Aus der WO 2017/143186 A1 ist ein weiteres Kochgerät bekannt, bei dem mit einem mobilen Endgerät und einer drahtlosen Verbindung sowohl ein Kochrezept gelesen werden kann als auch dieses als Automatikprogramm auf dem Kochgerät ausgeführt werden kann. Jeder Steuerbefehl wird dabei von dem Kochgerät durchgeführt.

Aus der EP 3 236 709 A1 ist ein Verfahren zur Steuerung eines Kochgeräts bekannt, bei dem das Kochgerät mit einem Mobiltelefon bedient werden kann. Dabei wird eine Signalstärke einer Kommunikationsverbindung zwischen Mobiltelefon und Kochgerät überwacht, und wenn diese einen vorgegebenen Signalstärke-Grenzwert unterschreitet, werden keine Bedienbefehle des Mobiltelefons am Kochgerät mehr ausgeführt.

Aus der DE 10 2012 205 621 A1 sind ein Kochgerät und ein Verfahren zu seiner Steuerung bekannt, wofür ein mobiles Endgerät als eine Art Fernbedienung verwendet wird. Zur Sicherheit sind dabei zwei Funkstrecken zwischen Kochgerät und mobilem Endgerät vorgesehen. Eine erste Funkstrecke ist dazu ausgelegt, Steuerbefehle beispielsweise über ein WLAN-Netzwerk zu empfangen. Eine zweite Funkstrecke ist eine NFC-Funkstrecke und arbeitet nur auf sehr kurze Entfernung. So kann bestätigt werden, dass sich eine Bedienperson mit dem mobilen Endgerät im Nahbereich des Kochgeräts befindet.

Aus der DE 10 2011 085 526 A1 ist es bekannt, an einem auf einem Kochfeld stehenden Kochtopf eine Primäreinheit mit einem Temperatursensor und einer Kommunikationseinheit zu befestigen. Die Primäreinheit kommuniziert mit einem mobilen Endgerät als Sekundäreinheit und kann beispielsweise Daten des Temperatursensors übertragen, die dann an der Sekundäreinheit für eine Bedienperson gut dargestellt werden können. Diese kann daraufhin manuell das Kochfeld entsprechend betätigen.

Aus der DE 10 2009 000 652 A1 ist ein weiteres System bekannt, bei dem ein Kochgerät mit einer Kommunikationsschnittstelle mit einem mobilen Endgerät mit einer weiteren Kommunikationsschnittstelle kommunizieren kann. An dem mobilen Endgerät können sowohl aus dem Internet geladene Rezepte angezeigt werden als auch ein Automatikprogramm ablaufen, mit dem das Kochgerät automatisch einen Kochvorgang durchführen kann.

Aus der US 2016/0174748 A1 ist ein weiteres System mit einem Kochgerät und einem externen Bediengerät bekannt. Das Kochgerät kann dabei von dem externen Bediengerät über ein Automatikprogramm gesteuert werden. Das externe Bediengerät ist vorteilhaft mit dem Internet verbunden.

### Aufgabe und Lösung

Der Erfindung liegt die Aufgabe zugrunde, ein eingangs genanntes Verfahren sowie ein entsprechendes System zu schaffen, mit denen Probleme des Standes der Technik gelöst werden können und es insbesondere möglich ist, Funktionalitäten eines Kochgeräts zu erweitern sowie den Bedienkomfort zu verbessern und gleichzeitig sicherzustellen, dass eine Bediensicherheit bzw. eine Betriebssicherheit des Kochgeräts erfüllt ist.

Gelöst wird diese Aufgabe durch ein Verfahren mit den Merkmalen des Anspruchs 1 sowie ein System mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das System beschrieben. Sie sollen jedoch unabhängig davon sowohl für das Verfahren als auch für ein entsprechendes System selbständig und unabhängig voneinander gelten können. Der Wortlaut der Ansprüche wird durch ausdrückliche Bezugnahme zum Inhalt der Beschreibung gemacht.

Es ist vorgesehen, dass das Kochgerät mindestens eine Heizeinrichtung und eine interne Kochgerätsteuerung aufweist. Die Kochgerätsteuerung entspricht vorteilhaft weitgehend einer normalen Kochgerätsteuerung und weist ein Kommunikationsmodul odgl. auf, um mit mindestens einem externen Steuergerät zu kommunizieren. Vorteilhaft erfolgt dies mittels Funk, in einfachen Varianten könnte es aber auch eine Kabelverbindung sein, wie sie beispielsweise von Bratspießen mit Temperatursensoren in Backöfen bekannt ist. Ein externes Steuergerät ist vorgesehen, das außerhalb des Kochgeräts angeordnet ist oder angeordnet werden kann, insbesondere im Fall eines vorgenannten Bratspießes. Selbst wenn dieser innerhalb einer Backofenmuffel verwendet wird, so gilt er im Rahmen dieser Erfindung doch als außerhalb des Kochgeräts anordenbar. Schließlich kann er entnommen und vom Backofen entfernt werden. Dieses externe Steuergerät gibt während eines Betriebsverfahrens Steuerbefehle an die Kochgerätsteuerung, um damit mindestens eine Heizeinrichtung zu steuern, gegebenenfalls auch mehrere Heizeinrichtungen oder weitere Funktionseinheiten des Kochgeräts. Dabei kann dieses externe Steuergerät entweder manuell vorgegebene Steuerbefehle an die Kochgerätsteuerung geben oder aber Automatik-Steuerbefehle. Manuell-Steuerbefehle, die es dann als Manuell-Steuergerät klassifizieren, sind solche, bei der eine Bedienperson direkt eine Leistungseinstellung oder eine Timer-Eingabe für die Heizeinrichtung eingibt oder vorgibt, beispielsweise eine Leistungsstufe 8 oder eine Timer-Einstellung von 20 min. Dabei laufen keine automatischen Programme ab, wie sie insbesondere als Kochprogramme bekannt sind. Jegliche Leistungsänderung wird dabei von einer Bedienperson manuell bzw. explizit vorgegeben. Darunter soll im Rahmen dieser Erfindung auch eine Eingabe durch Gestik oder durch Sprache verstanden werden, wozu dann möglicherweise nicht unbedingt eine Handbewegung erforderlich ist, aber doch zumindest eine explizite und bewusste Vorgabe durch eine Bedienperson.

Im Gegensatz dazu ist ein Automatik-Steuergerät im Rahmen dieser Erfindung so zu verstehen, dass auf dem externen Steuergerät ein Automatikprogramm abläuft. Dieses kann entweder bestimmte Temperaturprofile oder Leistungsprofile anfahren bzw. vorgeben, insbesondere durch Automatik-Steuerbefehle, beispielsweise zum Kochen von Kartoffeln oder Nudeln erst ein starkes Ankochen und Aufkochen mit sehr hoher Leistung sowie, daran anschließend, ein Weiterkochen mit deutlich reduzierter Leistung. Dann werden die entsprechenden Steuerbefehle für die Leistungsvorgabe von einem Automatikprogramm im externen Steuergerät, das dann eben ein Automatik-Steuergerät ist, an die Kochgerätsteuerung gegeben zur Umsetzung durch die Heizeinrichtung oder eine sonstige Funktionseinrichtung des Kochgeräts.

Eine weitere Möglichkeit für ein Automatik-Steuergerät ist ein solches externes Steuergerät, das einen Temperatursensor aufweist oder mit einem solchen verbunden ist, der dann entweder in einer Backofenmuffel angeordnet ist oder in oder an einem Kochgefäß für ein Kochfeld. Anhand der gelieferten Temperatursignale kann das externe Steuergerät als Automatik-Steuergerät entweder eine Temperatur konstant halten durch jeweilige Einstellung der Leistung oder, wie zuvor beschrieben, bestimmte Temperaturprofile durchfahren. Ein entsprechendes Automatik-programm kann einmal von einer Bedienperson gestartet werden und wird dann eben automatisch bzw. selbsttätig durchgeführt, allerdings nicht in der Kochgerätsteuerung im Kochgerät selbst, sondern von dem externen Steuergerät.

Erfindungsgemäß ist vorgesehen, dass das externe Steuergerät von der Kochgerätsteuerung klassifiziert wird als eine der beiden vorgenannten Arten, also entweder als ein Automatik-Steuergerät oder als ein Manuell-Steuergerät. Davon abhängig können sozusagen unterschiedliche Sicherheitsvorkehrungen bzw. Sicherheitsebenen eingehalten werden für einen sicheren Betrieb des Kochgeräts. Bei einem Manuell-Steuergerät kann nämlich davon ausgegangen werden, dass eine Bedienperson einen Steuerbefehl bewusst und auch unter Berücksichtigung der Situation am Kochgerät gibt und des Weiteren bei Eingabe des Steuerbefehls auch anwesend ist, um bei kritischen Situationen eingreifen zu können. Bei einem Automatik-Steuergerät kann davon nicht zwangsläufig ausgegangen werden, da es ja gerade als ein großer Vorteil eines solchen automatischen Programmablaufs suggeriert wird, diesen nicht selber durchführen zu müssen bzw. sich auf das Automatik-Steuergerät verlassen zu können und nicht anwesend sein zu müssen. Auch die Sinnhaftigkeit eines solchen automatisch erzeugten Steuerbefehls wird nicht überprüft. Dies wird nachfolgend noch näher erläutert im Zusammenhang mit verschiedenen vorteilhaften Ausgestaltungen des Erfindungsgegenstands.

Nach der Klassifizierung durch die Kochgerätsteuerung werden die Steuerbefehle des externen Steuergeräts von der Kochgerätsteuerung umgesetzt durch einen entsprechenden Betrieb der mindestens einen Heizeinrichtung oder sonstigen Funktionseinheit des Kochgeräts. Dabei wird im Rahmen der Erfindung laufend oder in Intervallen während eines Betriebs des Kochgeräts bzw. der Heizeinrichtung oder Funktionseinheit überprüft, ob die eingangs vorgenommene Klassifizierung noch zutrifft. Bei Änderung der Klassifizierung müssen nämlich bestimmte Änderungen im Betrieb oder im Verhalten des Kochgeräts vorgenommen werden, was ebenfalls nachfolgend noch näher erläutert wird.

Somit wird also eine Sicherheitsmaßnahme vom Kochgerät bzw. von der Kochgerätsteuerung durchgeführt, die relativ einfach ist und sich im Wesentlichen auf ein sehr gut überprüfbares Kriterium bezieht. Beschrieben worden ist das Verfahren hier für die Verwendung mit einem externen Steuergerät, es können aber auch mehrere externe Steuergeräte verwendet werden bzw. mit dem Kochgerät verbunden sein. Sie können gleichartig bzw. baugleich ausgebildet sein, damit mehrere Bedienpersonen gleichzeitig und komfortabel das Kochgerät bedienen können. Alternativ können mehrere externe Steuergeräte aber auch verschiedenartig sein. So können beispielsweise für eine Eingabe durch Gestik und durch Sprache zwei verschieden ausgebildete externe Steuergeräte vorgesehen werden, eines mit einer Kamera und das andere mit einem Mikrofon.

Es kann vorgesehen sein, dass direkt nach Übertragung der Information zur Klassifizierung, welche von dem externen Steuergerät selbst kommen kann, sowie nach vorgenommener Klassifizierung durch die Kochgerätsteuerung ein Betrieb des Kochgeräts möglich ist. Ein Betrieb einer ausgewählten Heizeinrichtung kann dann beginnen, wenn ein entsprechender Start-Steuerbefehl von dem externen Steuergerät abgegeben worden ist. Somit kann allgemein vorgesehen sein, dass nach Abschluss der Klassifizierung oder nach durchgeführter Klassifizierung des externen Steuergeräts durch die Kochgerätsteuerung das externe Steuergerät Steuerbefehle abgeben kann, die dann auch entsprechend umgesetzt werden. Eine nochmals weitere Betätigung oder Eingabe an dem Kochgerät selbst ist nicht notwendig.

Es ist vorteilhaft möglich, dass das externe Steuergerät vor der Klassifizierung durch die Kochgerätsteuerung, beispielsweise bei Einschalten des Kochgeräts oder des externen Steuergeräts, eine Klassifizierungsinformation an die Kochgerätsteuerung überträgt. Darin kann enthalten sein, ob das externe Steuergerät als Automatik-Steuergerät oder als Manuell-Steuergerät identifiziert ist bzw. klassifiziert werden soll. Wenn das externe Steuergerät grundsätzlich derart ausgestaltet ist, dass es sowohl als ein Manuell-Steuergerät als auch als ein Automatik-Steuergerät arbeiten kann, wird es entweder direkt und ausschließlich als Automatik-Steuergerät identifiziert und auch dementsprechend klassifiziert. Alternativ kann vorgesehen sein, dass am externen Steuergerät selbst eingegeben werden muss, ob eine manuelle Bedienung vorgesehen ist, beispielsweise mit Plus- und Minus-Vorgaben für eine Leistung, oder ob ein Automatik-Programm durchgeführt werden soll. Diese Eingabe wird dann als Klassifizierungsinformation an die Kochgerätsteuerung übertragen. Bei einer entsprechenden Änderung an der Handhabung des externen Steuergeräts kann eine andere Klassifizierungsinformation übertragen werden, alternativ wird die dann erfolgte geänderte Vorgabe von Steuerbefehlen von der Kochgerätsteuerung erkannt und umgesetzt.

Die Kochgerätsteuerung kann vorteilhaft noch weitere Informationen als Kriterium für die vorzunehmende Klassifizierung hinzuziehen. Dies können beispielsweise Art der Steuerbefehle sein, eine Häufigkeit von Steuerbefehlen sowie eine Kontinuität bzw. eine Konsistenz der Steuerbefehle, insbesondere bzgl. Stetigkeit einer Leistungsstufe. Diese weiteren Informationen werden vor allem dann im laufenden Betrieb des Kochgeräts von Bedeutung sein, wenn es darum geht, zu überprüfen, ob die eingangs vorgenommene Klassifizierung noch zutrifft.

In nochmals weiterer Ausgestaltung der Erfindung ist es möglich, dass für den Fall, dass die laufende oder in Intervallen vorgenommene Überprüfung ergibt, dass die vorherige bzw. eingangs getroffene Klassifizierung noch zutrifft, ein Betrieb des Kochgeräts bzw. der Heizeinrichtung oder Funktionseinheit des Kochgeräts, welche von dem externen Steuergerät gesteuert werden, weitergeführt wird wie bisher. Der Betrieb bleibt also unverändert. Dabei können besonders vorteilhaft Steuerbefehle zur Änderung einer Leistungserzeugung an der Heizeinrichtung unverändert von der Kochgerätsteuerung vom externen Steuergerät übernommen und umgesetzt werden. Dann kann nämlich die Kochgerätsteuerung davon ausgehen, dass der Betrieb weiterläuft wie bisher und somit auch keine Notwendigkeit eines Eingreifens besteht und insbesondere auch keine kritische Situation aufgetreten ist, die ein solches Eingreifen notwendig machen könnte.

In weiterer Ausgestaltung der Erfindung kann für den Fall, dass eine solche Überprüfung ergibt, dass die vorherige Klassifizierung nicht mehr zutrifft, eine Umklassifizierung des externen Steuergeräts vorgenommen werden. Vorteilhaft muss eine solche Umklassifizierung dann sogar vorgenommen werden. Eine Umklassifizierung sollte besonders vorteilhaft nur dann vorgenommen werden bzw. eine neue Klassifizierung vergeben werden, wenn nicht nur die Kriterien für die vorherige Klassifizierung nicht mehr erfüllt sind, sondern wenn auch die Kriterien für die neue Klassifizierung explizit erfüllt sind. Das externe Steuergerät kann dann also sozusagen nicht nur aus der vorherigen Klassifizierung herausfallen in eine neue Klassifizierung, sondern es soll auch in die neue Klassifizierung explizit hineinpassen. Dies gilt vor allem für den Fall, dass von einem Automatik-Steuergerät in ein Manuell-Steuergerät gewechselt werden soll. Bei einem Wechsel in die andere Richtung kann es ausreichen, wenn die Bedingungen für das Manuell-Steuergerät nicht mehr erfüllt sind, hier ist ein Wechsel der Klassifizierung schließlich eine Sicherheitsmaßnahme.

In weiterer Ausgestaltung der Erfindung kann vorgesehen sein, dass dann, wenn eine Überprüfung ergibt, dass die vorherige Klassifizierung nicht mehr zutrifft, wobei insbesondere das externe Steuergerät nicht mehr manuell bedient wird, sondern automatisch bzw. mit einem Programm als Automatik-Steuergerät arbeitet, das Kochgerät in einen sogenannten Sicherheitsmodus umgeschaltet wird. In diesem Sicherheitsmodus kann dann nicht mehr davon ausgegangen werden, dass die Bedienperson wie zuvor nahe am Kochgerät ist und darauf stattfindende Vorgänge überwachen kann, weswegen sie eben auch das Kochgerät manuell mit dem externen Steuergerät bedient hat. Vielmehr übernimmt dann ein Automatikprogramm odgl. im externen Steuergerät die Steuerung der mindestens einen Heizeinrichtung oder Funktionseinheit, was sozusagen weniger sicher ist. Ab jetzt kann es nämlich gut sein, dass eine Bedienperson sich entfernt, weswegen ja eben gerade ein solches Automatikprogramm gestartet worden sein könnte. Dann wird in Ausgestaltung der Erfindung eine gerade betriebene und von dem externen Steuergerät bis zu diesem Zeitpunkt gesteuerte Heizeinrichtung in ihrer Leistung reduziert. Eine Reduktion kann relativ stark ausfallen, so kann sie beispielsweise auf maximal 20 % ihrer vorherigen Heizleistung reduziert werden. Unter Umständen kann sie auch ganz abgeschaltet werden, was vor allem darin begründet ist, dass ja die vorherige Kontrollfunktion durch die Anwesenheit der Bedienperson nicht mehr gegeben ist.

In weiterer Ausgestaltung der Erfindung kann vorgesehen sein, dass für den Fall, dass das externe Steuergerät als ein Automatik-Steuergerät klassifiziert ist, die Kochgerätsteuerung noch Zusatzinformationen abfragt, um eine Art einer Temperaturregelung des externen Steuergeräts zu ermitteln und zu überprüfen. Dabei kann insbesondere abgefragt werden, ob es sich bei dem Betrieb der Heizeinrichtung des Kochgeräts um einen Kochprozess oder um einen Bratprozess handelt bzw. welches eine gewünschte Soll-Temperatur für die Temperaturregelung ist. Der Unterschied ist nämlich vor allem derjenige, dass Kochprozesse bei Temperaturen bis maximal 100°C durchgeführt werden, während ein Bratprozess Temperaturen von 200°C bis 250°C erreichen kann. Dieser Unterschied ist aber beträchtlich und bei höheren Temperaturen, also bei einem Bratprozess, ist auch eine mögliche Gefahr größer. Wenn ein Kochvorgang mit Wasser außer Kontrolle gerät bzw. ein Kochgefäß mit Wasser und eventuell Gargut darin nicht abgestellt wird, kann üblicherweise als maximaler Schaden das Kochgefäß leerkochen und das Gargut im Kochgefäß ansetzen, also sozusagen anbrennen. Zu hohe Temperaturen an einer Kochfeldplatte werden durch eine dafür vorgesehene bekannte Temperaturregelung vermieden, so dass kein weitergehender Schaden entstehen kann. Bei einem Bratvorgang entstehen durch die höheren Temperaturen auch größere Gefahren. Dann kann beispielsweise vorgesehen sein, dass bei nichtkonsistenten Steuerbefehlen des externen Steuergeräts als Automatik-Steuergerät eine Heizleistung schneller reduziert oder ganz abgeschaltet wird.

In nochmals weiterer Ausgestaltung ist es bei dem vorbeschriebenen Fall auch möglich, dass Zusatzinformationen vom externen Steuergerät während des laufenden Betriebs der Heizeinrichtung abgeglichen werden. Insbesondere kann dies eine Temperaturinformation sein, die von einem Temperaturfühler an der Heizeinrichtung oder für die Heizeinrichtung, alternativ für das Kochgefäß, stammt. So kann auch beispielweise ermittelt werden, ob ein Erhöhen der Leistung durch entsprechende Steuerbefehle des externen Steuergeräts zu einer erhöhten Temperatur an der Heizeinrichtung bzw. an dem Kochgefäß führt. Falls dies nicht der Fall ist, liegt ein Fehler vor und die Leistung sollte reduziert oder ganz abgeschaltet werden.

In einer Ausgestaltung der Erfindung kann vorgesehen sein, dass das externe Steuergerät ein zusätzliches, ggf. auch nachträglich hinzufügbares Gerät oder eine nachträglich anbindbare Bedienerschnittstelle ist. Das externe Steuergerät weist dann übliche Bedienelemente auf, insbesondere Tasten für eine Leistungsverstellung. Ein solches externes Steuergerät kann vorteilhaft mittels einer Funkstrecke mit der Kochgerätsteuerung verbunden sein, insbesondere mittels WLAN, Zigbee, Bluetooth oder BLE. Alternativ könnte es eine IR-Verbindung sein, die aber störanfälliger wäre und eine direkte Sichtlinie braucht. Ein solches externes Steuergerät kann in einer ersten Variante vorteilhaft nur für einen Betrieb als Manuell-Steuergerät ausgebildet sein, also quasi als externe Bedieneinrichtung, die vom Kochgerät eine gewisse Strecke entfernt werden kann.

In einer zweiten Variante kann ein solches externes Steuergerät aufwändiger ausgebildet sein und Automatik-Programme odgl. aufweisen, so dass sie dann auch als ein Automatik-Steuergerät ausgebildet sein kann und als solches arbeiten kann, vorzugsweise zusätzlich zu einem möglichen Betrieb mit rein manueller Bedienung, also als Manuell-Steuergerät. Bei einem solchen externen Steuergerät ist die erfindungsgemäße Unterscheidung bzw. Klassifizierung wichtig, da beide Betriebsarten vorkommen können als normaler Betrieb.

In einer grundsätzlich anderen Ausgestaltung der Erfindung ist das externe Steuergerät ein mobiles Endgerät wie ein Smartphone, PDA oder ein Tablet-Computer. Auch ein solches sozusagen aufwändiges bzw. komplexes externes Steuergerät kann mittels einer vorgenannten Funkstrecke mit WLAN, Zigbee, Bluetooth oder BLE mit der Kochgerätsteuerung verbunden sein. Das mobile Endgerät kann direkt oder über eine darauf laufende App eine Temperaturregelung durchführen zur Vorgabe einer Heizleistung für die Heizeinrichtung mittels Steuerbefehlen als Automatik-Programme. So können bestimmte Leistungsprofile über der Zeit angesteuert werden. Somit wird ein derartiges mobiles Endgerät häufig zumindest auch als Automatik-Steuergerät benutzt und einklassifiziert werden, wobei es auch möglich ist, wie mit einem zuvor beschriebenen externen Steuergerät nur manuelle Steuerbefehle abzugeben.

Die genannten Automatik-Programme können in einer Ausgestaltung der Erfindung so ausgebildet sein, dass sie Leistungs-Zeit-Profile vorgeben bzw. an die Kochgerätsteuerung geben als Steuerbefehle. Deutlich komfortabler ist ein Automatik-Steuergerät, wenn in einer Ausgestaltung der Erfindung das externe Steuergerät mit einem Temperatursensor verbunden ist, also ein Temperatursensor vorhanden ist. Dann kann nicht nur ein Leistungsprofil vorgegeben werden, sondern ein geregeltes Temperaturprofil. Ebenso kann eine Temperatur einfach nur konstant gehalten werden. Ein Temperaturfühler ist vorteilhaft drahtlos mit dem externen Steuergerät verbunden mittels einer Funkstrecke, vorteilhaft einer vorgenannten Funkstrecke. Der Temperatursensor kann für ein Kochfeld als Kochgerät an einem Kochgeschirr angeordnet sein oder in ein Kochgeschirr integriert sein. Alternativ könnte er als Bratenspieß ausgebildet sein zum Einsatz in einem Backofen. Temperatursensoren zur Anordnung an einem Kochgefäß sind im Stand der Technik grundsätzlich bekannt. Mittels eines solchen Temperatursensors kann das externe Steuergerät ein geregeltes Temperaturprofil ansteuern oder eine Temperaturregelung des Kochgeschirrs übernehmen und dazu der Kochgerätsteuerung eine Leistungsregelung für die Heizeinrichtung dieses Kochgeschirrs vorgeben.

Alternativ kann das externe Steuergerät selbst einen Temperatursensor aufweist und auch selbst an einem Kochgeschirr angeordnet sein oder in ein Kochgeschirr integriert sein. Dann ist es vorteilhaft als externes Steuergerät ausgebildet. In diesem Fall wird das externe Steuergerät vorteilhaft als Automatik-Steuergerät klassifiziert, die Erfassung der Temperatur durch das externe Steuergerät selbst macht ja eigentlich hauptsächlich dann Sinn.

Bevorzugt kann vorgesehen sein, dass für den Fall, dass das externe Steuergerät als ein Manuell-Steuergerät klassifiziert ist und dies auch nach jeder Überprüfung noch zutrifft, keine Einschränkungen oder Änderungen an den von dem externen Steuergerät gegebenen Steuerbefehlen vorgenommen werden. Dann wird nämlich davon ausgegangen, dass die Bedienung tatsächlich manuell durch eine Bedienperson erfolgt, die dann anwesend ist bzw. in der Nähe des Kochgeräts ist. Einen möglichen kritischen Zustand am Kochgerät wird sie wohl feststellen und vermeiden können, weswegen keine Sicherheitsmaßnahmen ergriffen werden müssen.

In vorteilhafter Ausgestaltung der Erfindung kann, so lange wie die ursprüngliche Klassifizierung noch zutrifft, ein Betrieb des Kochgeräts bzw. der Heizeinrichtung weitergeführt werden wie bisher. Es gibt dann ja keinen Grund zu einer Änderung des Betriebs.

In Weiterbildung der Erfindung ist vorgesehen, dass bei einer laufenden oder in Intervallen erfolgenden Überprüfung, ob die Klassifizierung noch zutrifft, ein Temperaturwert des mit der Heizeinrichtung beheizten Kochgeschirrs oder der Heizeinrichtung selbst abgefragt wird. Diese Abfrage kann auch durch das externe Steuergerät erfolgen. Die Kochgerätsteuerung kann dann überprüfen, ob dieser Temperaturwert mit der bisher an die Heizeinrichtung für das Kochgeschirr gegebenen Heizenergie übereinstimmt bzw. ob er angesichts dieser Heizenergie plausibel ist. Ist er es nicht liegt wohl ein Problem oder ein Fehler vor. Die Kochgerätsteuerung kann dann den Betrieb des Kochgeräts einschränken oder es unter Umständen ganz ausschalten.

Bei einer Überprüfung, ob die Klassifizierung des externen Steuergeräts noch zutrifft, kann vorteilhaft eine Häufigkeit einer Leistungsverstellung für die Heizeinrichtung erfasst werden als Anzeichen dafür, was für eine Art von Steuergerät vorliegt. Für den Fall, dass die Leistung mehr als 3 mal pro Minute geändert wird, insbesondere mehr als 5 mal oder sogar mehr als 10 mal, wird die Klassifizierung geändert von einem Manuell-Steuergerät in ein Automatik-Steuergerät. Bei einer derart häufigen Änderung der Leistungsvorgabe ist davon auszugehen, dass dies nicht durch eine Bedienperson erfolgt, also manuell, sondern durch ein Automatik-Steuergerät mit einem Automatikprogramm bzw. vor allem einer Temperaturregelung. Zur Nachführung der Temperatur wird dann in der Regel häufig die Leistung angepasst bzw. verstellt. Ob nämlich das externe Steuergerät mit einem Temperatursensor verbunden ist oder nicht weiß die Kochgerätsteuerung nicht, sie muss es auch nicht wissen.

In Ausgestaltung der Erfindung kann bei der Überprüfung, ob die Klassifizierung noch zutrifft, erfasst werden, ob eine Leistungsverstellung durch das das externe Steuergerät entweder in unregelmäßigen Zeitabständen erfolgt oder in regelmäßigen Zeitabständen bzw. mit ganzzahligen, insbesondere einstelligen, Vielfachen einer bestimmten Zeiteinheit erfolgt. Im Fall von unregelmäßigen Zeitabständen liegt ziemlich sicher eine manuelle Bedienung vor, es wird also als Manuell-Steuergerät klassifiziert. Im anderen Fall wird das externe Steuergerät als ein Automatik-Steuergerät klassifiziert.

In Ausgestaltung der Erfindung kann vorgesehen sein, dass im Fall einer Klassifizierung als Automatik-Steuergerät bei Abbruch einer Kommunikation zwischen Kochgerätsteuerung und externem Steuergerät eine von dem externen Steuergerät bis gerade betriebene Heizeinrichtung in ihrer Leistung reduziert wird. Eine Reduktion kann deutlich sein, beispielsweise auf maximal 20% ihrer Maximalleistung erfolgen. Insbesondere kann die Heizeinrichtung ganz abgeschaltet werden. Bei einem Automatik-Steuergerät kann nämlich nicht davon ausgegangen werden, dass eine Bedienperson anwesend ist. Grundsätzlich ist dann ein Betrieb des Kochgeräts noch durch Bedienelemente am Kochgerät selbst möglich, vorzugsweise ohne Einschränkungen möglich. Schließlich ist dann die Bedienperson dafür ja zwingend anwesend.

Im anderen Fall einer Klassifizierung als ein Manuell-Steuergerät kann bei Abbruch der Kommunikation zwischen Kochgerätsteuerung und externem Steuergerät eine von dem externen Steuergerät bis gerade betriebene Heizeinrichtung weiterbetrieben werden. Vorzugsweise kann sie in ihrer Leistung unverändert weiterbetrieben werden, weil nämlich bei einem Manuell-Steuergerät davon ausgegangen werden kann, dass eine Bedienperson anwesend ist.

Ein Kochgerät und mindestens ein externes Steuergerät bilden gemeinsam ein erfindungsgemäßes System. Dabei kann vorgesehen sein, dass unterschiedliche externe Steuergeräte mit einem Kochgerät zusammen arbeiten können, ggf. auch mehrere gleichzeitig, so dass es möglich ist, externe Steuergeräte mit unterschiedlichem Leistungsumfang und Bedienkomfort auszuwählen. Auch ein Nachrüsten ist so möglich. Ein Kochgerät kann dann eben dafür vorbereitet sein, insbesondere ist die Kochgerätsteuerung speziell dazu ausgebildet, mit mindestens einem externen Steuergerät zu kommunizieren und dieses zu klassifizieren bzw. von einem anderen externen Steuergerät zu unterscheiden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen auf anderen Gebieten verwirklicht sein . Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Darstellung eines erfindungsgemäßen ersten Systems mit einem Kochfeld als Kochgerät und einem Mobiltelefon als externem Steuergerät,
- Fig. 2: eine Darstellung eines erfindungsgemäßen zweiten Systems mit einem Kochfeld als Kochgerät und einem Temperaturfühler als externem Steuergerät und
- Fig. 3: ein Ablaufdiagramm eines erfindungsgemäßen Steuerverfahrens.

### Detaillierte Beschreibung der Ausführungsbeispiele

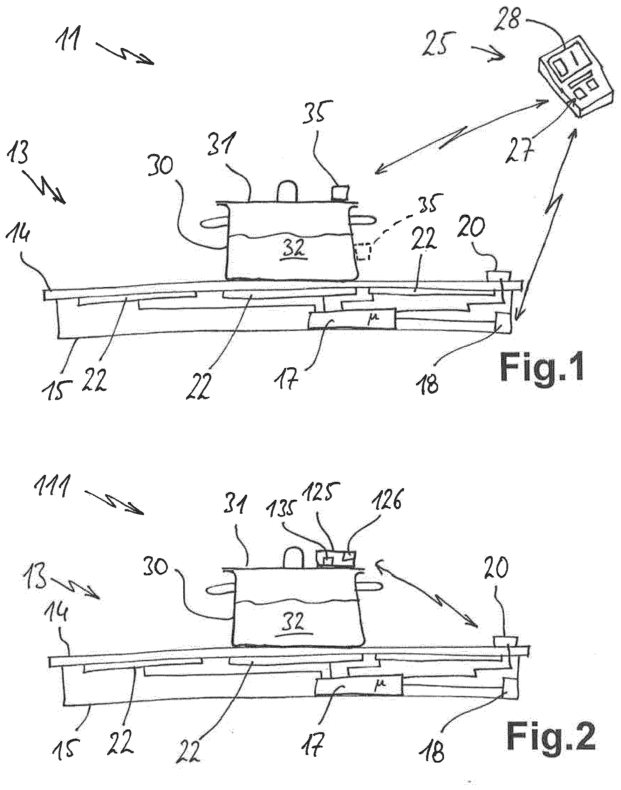

Die Fig. 1 zeigt ein erfindungsgemäßes System 11, das ein Kochfeld 13 als Kochgerät sowie ein Mobiltelefon 25 als externes Steuergerät aufweist. Das Kochfeld 13 weist einen an sich üblichen Aufbau auf mit einer Kochfeldplatte 14 und einem Gehäuse 15 darunter, in dem die Funktionseinheiten des Kochfelds angeordnet sind. Diese sind eine Kochfeldsteuerung 17, die mit einer Bedieneinrichtung 20 verbunden ist. Diese ist auf der Kochfeldplatte 14 dargestellt, obwohl sie in der Praxis darunter angeordnet sein sollte. Die Bedieneinrichtung 20 weist Bedienelemente und eine Anzeige auf, wie dies bekannt ist. Des Weiteren ist die Kochfeldsteuerung 17 mit einem Funkmodul 18 verbunden zur Kommunikation mit dem Mobiltelefon 25. Das Funkmodul 18 kann mit einem Funkstandard arbeiten, den das Mobiltelefon beherrscht, beispielsweise WLAN, Zigbee, Bluetooth oder BLE. Für die üblicherweise in der Praxis gewünschten oder gebrauchten Reichweiten bzw. Abstände reichen alle drei. Alternativ können, wenn anstelle des Mobiltelefons ein anderes externes Steuergerät verwendet wird, ein anderer Funkstandard verwendet werden. Es kann unter der Kochfeldplatte 14 angeordnet sein im Gehäuse 15, unter Umständen direkt an der Unterseite der Kochfeldplatte 14 für eine möglichst störungsfreie Funkübertragung. Ist das erfindungsgemäße Kochgerät ein Backofen, so könnte ein dort vorteilhaft verwendeter Bratspieß als externes Steuergerät mit einem Temperaturfühler mittels eines Kabels mit einer Backofensteuerung verbunden werden, da ein Funken aus einer Backofenmuffel heraus schwierig ist. Die Kabelverbindung an die Backofensteuerung würde dann dem Funkmodul 18 als Kommunikationsmodul für die Steuerung entsprechen, insbesondere eine Steckerbuchse an einer Innenwand der Backofenmuffel.

Das Kochfeld 13 weist noch Heizeinrichtungen 22 im Gehäuse auf, die an die Unterseite der Kochfeldplatte 14 angelegt sind. Vorteilhaft sind dies hier Induktionsheizspulen 22, es kann aber jeder Art von Heizeinrichtung sein, auch Strahlungsheizeinrichtungen und Gas oder Mischformen davon. Die Induktionsheizspulen 22 können einzeln betrieben werden oder im Verbund als eine Kochstelle und mit einer gemeinsamen Leistungsstufe bzw. Leistungsdichte, wobei sie dann eben wie eine einzige Heizeinrichtung arbeiten für das Verständnis der vorliegenden Erfindung.

Auf einer mittleren Induktionsheizspule 22 ist ein Kochgefäß 30 aufgestellt mit einem Deckel 31, das Wasser 32 enthält für einen Kochprozess, hier beispielhaft weil eine Bedienperson Nudeln kochen möchte. Auf dem Deckel 31 ist ein Temperaturfühler 35 angeordnet, beispielsweise magnetisch oder festgeklemmt. Der Temperaturfühler 35 ermittelt die Temperatur am Topfdeckel, wobei daraus die Temperatur des Wassers 31 bestimmt werden kann, beispielsweise durch ein Sensorelement, das federnd an den Deckel 31 angedrückt ist und direkten Kontakt hat. Als alternativer Anbringungsort könnte die gestrichelt dargestellte Position rechts unten an der Seite des Kochgefäßes 30 dienen mit dem Vorteil, dass hier durch die Wand des Kochgefässes 30 relativ direkt die Temperatur des Wassers 31 bestimmt werden kann. Eine gute Abstrahlfreiheit für die Funkverbindung ist auch hier gegeben, wenngleich nicht ganz so gut wie oben am Deckel 31. Als nochmals weitere Alternative könnte ein Temperaturfühler 35 auch einen abragenden Temperatursensor aufweisen, der beispielsweise vorne an einem kurzen Kabel angeordnet ist. Dieser abragende flexible Temperatursensor kann dann von oben in das Kochgefäß 30 hineinragen und im Wasser 32 hängen um die Wassertemperatur direkt und maximal verfälschungsfrei zu messen. Der Temperaturfühler 35 könnte auch allgemein mehrere Temperatursensoren aufweisen für eine verteilte und bessere Messung. Ebenfalls ist ein Temperatursensor denkbar, der sich innerhalb des Kochgefäßes befindet. Dies ist besonders im Falle von Bratvorgängen in Pfannen vorstellbar.

Der Temperaturfühler 35 weist eine Funkverbindung auf bzw. ist für eine solche ausgebildet mit einem nicht dargestellten integrierten Funkmodul, wobei ein Funkstandard dem des Funkmoduls 18 entspricht. Die Energieversorgung erfolgt vorteilhaft mittels eines eingebauten Akkumulators, der auswechselbar ist oder für drahtloses oder kabelbasiertes Laden ausgebildet sein kann. Ebenso können ganz allgemein Thermogeneratoren, Photovoltaikmodule oder Induktionsspulen vorhanden sein, die die Energieversorgung sicherstellen. Der Temperaturfühler 35 weist eben mindestens einen nicht dargestellten Temperatursensor auf, der vorteilhaft in Kontakt mit dem Kochgefäß bzw. dem Deckel 31 ist. Der Temperaturfühler 35 schickt Signale mit der Temperaturinformation über eine Funkverbindung an das Mobiltelefon 25. Dies kann in vorgebbaren Zeitintervallen erfolgen oder ereignisbasiert erfolgen bei ausreichend großer Änderung eines Temperaturwerts, wie es an sich leicht vorstellbar ist. Das Mobiltelefon 25 führt dann mit der Temperaturinformation ein Automatikprogramm durch, beispielsweise wie vorgenannt zum Kochen von Nudeln. Dieses Automatikprogramm kann auf einer App auf dem Mobiltelefon 25 laufen, die auch Bedienereingaben zulässt. Diese können unterschiedlich sein, beispielsweise als Hauptpunkt das Kochen von Nudeln. Als Unterpunkt kann dann eine Kochzeit für die Nudeln eingegeben werden, beispielsweise 10 min. Alternativ könnte dies auch durch eine Kamera des Mobiltelefons 25 erfasst werden durch Schrifterkennung oder als leichter lesbare Zubereitungsinformation mittels QR-Code odgl.. Am Mobiltelefon können auf an sich bekannte Art und Weise Informationen oder Vorgaben über Bedienelemente 27 eingegeben werden. Informationen können einer Bedienperson an einem Display 28 angezeigt werden. Ist das Mobiltelefon 25 ein Smartphone, oder alternativ ein Tablet-Computer, so kann es einen bekannten Touch-Screen aufweisen, der Bedienelemente und Display vereint.

Mittels des Temperaturfühlers 35 kann nach Starten dieses Automatikprogramms die Temperatur des Wassers 31 erfasst werden. Das Automatikprogramm sendet zuerst Steuerbefehle an die Kochgerätsteuerung 17 über das Funkmodul 18, die von der Kochgerätsteuerung 17 umgesetzt werden als Leistungsvorgabe an die Induktionsheizspulen 22. Zum schnellen Kochen von Wasser wird die Leistungsvorgabe üblicherweise sehr hoch sein, damit das Wasser 32 schnell kocht. Hat der Temperaturfühler 35 erfasst, dass der Kochpunkt des Wassers 32 erreicht worden ist, gibt er diese Information über das Automatikprogramm an die Kochgerätsteuerung 17. Entweder erzeugt die dann ein Signal an die Bedienperson oder das Mobiltelefon 25 selbst. Dann kann die Bedienperson die Nudeln ins kochende Wasser geben. Entweder erfasst der Temperaturfühler 35 dies anhand eines deutlichen Temperaturabfalls, oder die Bedienperson gibt es ins Mobiltelefon 25 ein. Dann regelt das Automatikprogramm, in der Regel durch Reduzieren der Leistungsvorgabe nach einer Minute, die Temperatur des Wassers 32 auf knapp 100°C ein anhand der Temperaturinformation. Am Ende des Garvorgangs wird am besten die Leistung ganz abgestellt und wieder ein Signal an die Bedienperson abgegeben.

Im vorherigen Beispiel arbeitet das Mobiltelefon 25 als Automatik-Steuergerät, da auf ihm ein automatisches Programm abläuft. Es könnte aber auch leicht vorstellbar als Manuell-Steuergerät arbeiten, wenn eine Bedienperson am Mobiltelefon 25 auch wie an einem externen Steuergerät eindeutige und direkte Bedienbefehle eingeben kann, die als Steuerbefehle an die Kochgerätsteuerung 17 gegeben werden können. Dies wäre beispielsweise eine direkte Leistungsvorgabe, beispielsweise mit Leistungsstufen. Im Prinzip entspricht eine solche direkte Leistungsvorgabe einer Eingabe wie an der Bedieneinrichtung 20. Das Mobiltelefon 25 kann also sowohl als Automatik-Steuergerät als auch als Manuell-Steuergerät betrieben werden und dann ein solches für die Kochgerätsteuerung 17 sein. Ein Kochfeld ohne erfindungsgemäße Klassifizierung würde diesen Unterschied daher nicht bemerken, mit den bekannten Nachteilen.

Eine andere Möglichkeit mit einem reinen Automatik-Steuergerät ist in Fig. 2 dargestellt. Auf das Kochfeld 11 aus Fig. 1 ist hier wiederum das Kochgefäß 31 aus Fig. 1 aufgestellt, auf dessen Deckel 31 ein Temperatursteuergerät 125 aufgesetzt ist ähnlich wie zuvor der Temperaturfühler 35. In dem Temperatursteuergerät 125 sind mindestens ein Temperatursensor 135 und ein Funkmodul enthalten wie zuvor, zusätzlich aber auch eine Temperatursteuerung 126. Diese Temperatursteuerung 126 enthält einen Microcontroller mit mindestens einem Automatik-programm sowie eine Eingabemöglichkeit, vorteilhaft mittels Bedienelementen und einem Display oder Touchscreen. Wie zuvor für das Mobiltelefon 25 in Fig. 1 beschrieben kann ein Automatikprogramm ausgewählt werden und dann durchgeführt werden. Die dafür notwendigen Steuerbefehle gibt das Temperatursteuergerät 125 über das Funkmodul 18 an die Kochgerätsteuerung zur entsprechenden Ansteuerung der Heizeinrichtungen zur Temperaturregelung. Im Vergleich zur Fig. 1 wird das sozusagen zwischengeschaltete Mobiltelefon 25 eingespart und dazu mit dem Temperaturfühler zusammengefasst. Das Temperatursteuergerät 125 wird vorteilhaft und meistens, eigentlich in jedem Fall nur, als Automatik-Steuergerät arbeiten. Da einer Bedienperson dabei ein völlig eigenständiger Betrieb suggeriert wird und sie sich dann aber entfernen könnte während des Ablaufs des Automatikprogramms gilt hier eine erhöhte Sicherheitsanforderung.

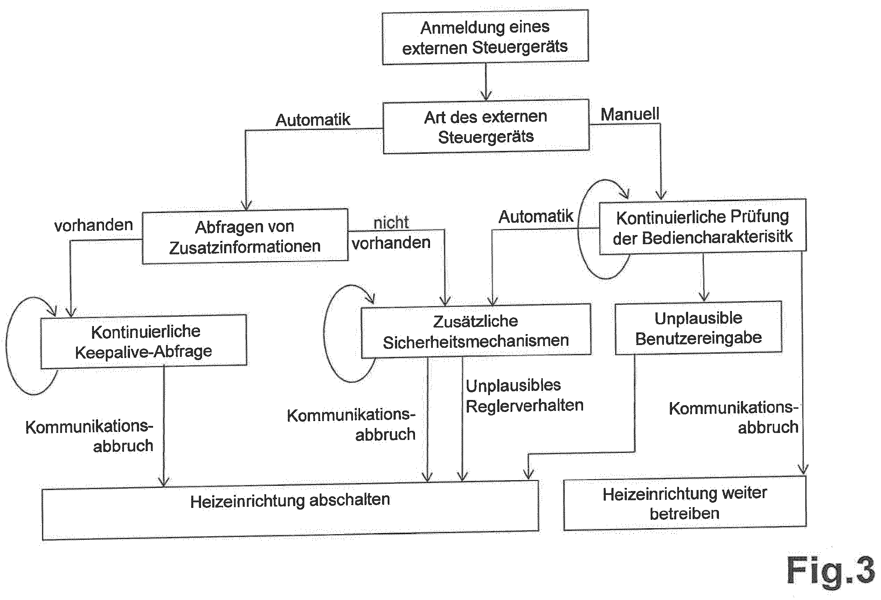

An dieser Stelle spielt nun die Erfindung eine wichtige Rolle. Dazu wird noch das Diagramm der Fig. 3 erläutert. Wenn sich ein externes Steuergerät zum ersten Mal bei der Kochgerätsteuerung anmeldet muss es unterschieden bzw. klassifiziert werden einerseits als ein Automatik-Steuergerät oder andererseits als ein Manuell-Steuergerät. Dazu kann es am Anfang ein bestimmtes Signal senden, das die Information enthält, welcher Art das externe Steuergerät überhaupt sein kann bzw. in diesem Fall ist. Wird es als ein Automatik-Steuergerät klassifiziert, so können im laufenden Betrieb Zusatzinformationen abgefragt werden, beispielsweise nach der Art des Prozesses als Kochprozess oder Bratprozess, alternativ nach einer vorgegebenen Soll-Temperatur für die Temperaturregelung, wie dies zuvor beschrieben worden ist. Sind diese Zusatzinformationen vorhanden, so kann eine kontinuierliche Keepalive-Abfrage dieser Informationen, oder auch einfach nur des Betriebszustandes des Kochgeräts oder des externen Steuergeräts durchgeführt werden. Damit wird überprüft, ob die Funkverbindung noch besteht und das externe Automatik-Steuergerät noch ordnungsgemäß arbeitet. Solange geht der Betrieb der Heizeinrichtung weiter. Ergibt die Keepalive-Abfrage aber, dass die Funkverbindung bzw. Kommunikation hin zum Kochfeld gestört ist oder die prozessrelevanten Zusatzinformationen nicht mehr ordnungsgemäß ankommen, so wird die bislang gesteuerte Heizeinrichtung als Sicherheitsmaßnahme abgeschaltet.

Meldet sich das externe Steuergerät als Automatik-Steuergerät an, obwohl keine Zusatzinformationen vorhanden sind, so ist davon auszugehen, dass die notwendigen Sicherheitsstandards und die notwendige Sorgfalt bei der Programmierung des externen Automatik-Steuergerätes nicht angewandt wurden. In diesem Falle werden zusätzliche Sicherheitsmaßnahmen ergriffen, beispielsweise die Energiefreigabe eingeschränkt oder eine Höchsttemperatur begrenzt. Auf diese Sicherheitsmaßnahmen soll hier nicht weiter eingegangen werden, es wird aber explizit auf die Patentanmeldung DE 102017220814.7 derselben Anmelderin mit dem Anmeldetag vom 22. November 2017 verwiesen. Bei einem Kommunikationsabbruch mit dem Kochfeld oder bei unplausiblem Reglerverhalten mit nicht passenden oder sehr stark variierenden Steuerbefehlen wird dann die Heizeinrichtung abgeschaltet, während sie ohne diese Ereignisse weiter betrieben wird wie bisher. Dies wird laufend überprüft.

Wird das externe Steuergerät als Manuell-Steuergerät klassifiziert, so kann dieses, wie auch im ersten Fall, die Leistung der Heizeinrichtungen verstellen. Es wird jedoch die Bediencharakteristik kontinuierlich überprüft. Bleibt es bei der normalen Bediencharakteristik wie bisher, ändern sich also die Steuerbefehle nicht zu häufig und nicht zu regelmäßig in exakt wiederkehrenden zeitlichen Abständen, so wird die Heizeinrichtung weiter betrieben wie bisher bzw. nach dem letzten gültigen Steuerbefehl vom externen Steuergerät. Dies gilt selbst in dem Fall, dass die Kommunikation abbricht, weil dann davon ausgegangen wird, dass beim Manuell-Steuergerät die Bedienperson noch anwesend ist oder zumindest plausible Steuerbefehle gegeben hat und lediglich die Kommunikation zwischen dem externen Steuergerät und dem Kochfeld abgebrochen ist. Der Kommunikationsabbruch ist also kein Grund, die Heizeinrichtung abzuschalten. Wird die Bedienereingabe unplausibel weil beispielsweise zu häufig zu stark abweichend oder erratisch, was anhand der Steuerbefehle geprüft wird, so wird die Heizeinrichtung auch abgeschaltet.

Ergibt die zuvor ausführlich erläuterte kontinuierliche Prüfung der Bediencharakteristik, dass die Klassifizierung als Manuell-Steuergerät nicht mehr zutrifft oder noch nie zugetroffen hat, so wird das externe Steuergerät als Automatik-Steuergerät umklassifiziert. Dann werden auch noch die zusätzlichen Sicherheitsmaßnahmen ergriffen wie zuvor erläutert. In diesem Falle geht die Kochgerätsteuerung davon aus, dass sich das externe Steuergerät bereits fälschlicherweise als Manuell-Steuergerät angemeldet hat, eigentlich aber ein Automatik-Steuergerät ist. Alternativ könnte der Betrieb dann in den Zustand wechseln wie wenn von Anfang an eine Klassifizierung als Automatik-Steuergerät vorgelegen hätte, die zutreffend wäre. Dabei können dann wieder Zusatzinformationen abgefragt werden oder eben direkt die zusätzlichen Sicherheitsmaßnahmen ergriffen werden.

Das Mobiltelefon 25 kann also am Anfang als Manuell-Steuergerät oder als Automatik-Steuergerät klassifiziert werden, abhängig davon, was eine Bedienperson an ihm eingibt und welchen Betrieb sie wünscht bzw. vorhat. Ein Wechsel kann sich nachträglich während des Betriebs des Kochfelds 11 ergeben.

Das Temperatursteuergerät 125 kann in aller Regel nur als Automatik-Steuergerät arbeiten. Ein Wechsel der Klassifizierung ist hier eigentlich kaum vorstellbar oder sinnvoll. Hauptsächlich geht es bei der Erfindung also um Fälle wie denjenigen des Mobiltelefons 25 oder eines anderen externen Steuergeräts, die beide Arten von externem Steuergerät sein können bzw. auf beide Arten bedient werden können. Ebenso kann aber auch ein Betrieb mit einem externen Automatik-Steuergerät erfolgen, welches sich zwar fälschlicherweise als Manuell-Steuergerät anmeldet, aber durch seine integrierten Regelalgorithmen nicht die zusätzlichen Sicherheitsalgorithmen verletzt. Mit der Erfindung kann hier die Sicherheit bei der Anbindung von externen Steuergeräten, insbesondere mit unvorhersehbarer Wirkungsweise, an ein Kochgerät stark erhöht werden ohne Einbußen beim Bedienkomfort und beim Zusatznutzen, den ein ordnungsgemäß arbeitendes externes Steuergerät einer Bedienperson bringen kann.

## Patentansprüche

1. Verfahren zur Steuerung eines Kochgeräts (13) mit einem externen Steuergerät (25, 125), wobei:
- das Kochgerät (13) mindestens eine Heizeinrichtung (22) und eine interne Kochgerätsteuerung (17) aufweist,
- das externe Steuergerät (25, 125) außerhalb des Kochgeräts (13) angeordnet ist,
- das externe Steuergerät (25, 125) Steuerbefehle an die Kochgerätsteuerung (17) gibt zur Steuerung mindestens der Heizeinrichtung (22),
- das externe Steuergerät (25, 125) von der Kochgerätsteuerung (17) klassifiziert wird entweder als ein Automatik-Steuergerät oder als ein Manuell-Steuergerät,
- bei einem Automatik-Steuergerät ein Automatikprogramm auf dem externen Steuergerät (25, 125) abläuft, das entweder bestimmte Temperaturprofile oder Leistungsprofile vorgibt durch Automatik-Steuerbefehle,
- bei einem Manuell-Steuergerät eine Bedienperson Manuell-Steuerbefehle an dem Manuell-Steuergerät direkt als eine Leistungseinstellung oder eine Timer-Eingabe für die Heizeinrichtung (22) eingibt oder vorgibt, wobei jegliche Leistungsänderung dabei von einer Bedienperson manuell bzw. explizit vorgegeben wird,
- nach der Klassifizierung die Steuerbefehle des externen Steuergeräts (25, 125) von der Kochgerätsteuerung (17) umgesetzt werden,
- laufend oder in Intervallen während eines Betriebs des Kochgeräts (13) überprüft wird, ob die Klassifizierung noch zutrifft,
**dadurch gekennzeichnet, dass**
bei der Überprüfung, ob die Klassifizierung noch zutrifft, eine Häufigkeit einer Leistungsverstellung erfasst wird für die Heizeinrichtung (22), wobei für den Fall, dass die Leistung mehr als 3 mal pro Minute geändert wird, die Klassifizierung geändert wird von einem Manuell-Steuergerät in ein Automatik-Steuergerät,
oder dass bei der Überprüfung, ob die Klassifizierung noch zutrifft, erfasst wird, ob eine Leistungsverstellung durch das externe Steuergerät (25, 125) entweder in unregelmäßigen Zeitabständen erfolgt oder in regelmäßigen Zeitabständen bzw. mit ganzzahligen Vielfachen einer bestimmten Zeiteinheit erfolgt, wobei das externe Steuergerät im ersten Fall als ein Manuell-Steuergerät klassifiziert wird und im zweiten Fall als ein Automatik-Steuergerät klassifiziert wird.

2. Verfahren nach Anspruch 1, **dadurch gekennzeichnet, dass** das externe Steuergerät (25, 125) vor der Klassifizierung durch die Kochgerätsteuerung (17) eine Klassifizierungsinformation an die Kochgerätsteuerung überträgt, die das externe Steuergerät als Automatik-Steuergerät oder als Manuell-Steuergerät identifiziert, wobei vorzugsweise die Kochgerätsteuerung noch weitere Informationen als Kriterium für die Klassifizierung hinzuzieht aus der Gruppe: Art der Steuerbefehle, Häufigkeit der Steuerbefehle, Kontinuität bzw. Konsistenz der Steuerbefehle.

3. Verfahren nach Anspruch 1 oder 2, **dadurch gekennzeichnet, dass** für den Fall, dass die Überprüfung ergibt, dass die vorherige Klassifizierung noch zutrifft, ein Betrieb des Kochgeräts (13) bzw. der Heizeinrichtung (22) des Kochgeräts, die von dem externen Steuergerät (25, 125) gesteuert werden, weitergeführt wird wie bisher, wobei vorzugsweise Steuerbefehle zu einer Änderung einer Leistungserzeugung an der Heizeinrichtung unverändert von der Kochgerätsteuerung (17) übernommen und umgesetzt werden.

4. Verfahren nach einem der vorhergehenden Ansprüche, **dadurch gekennzeichnet, dass** für den Fall, dass die Überprüfung ergibt, dass die vorherige Klassifizierung nicht mehr zutrifft, eine Umklassifizierung vorgenommen wird, vorzugsweise nur dann, wenn nicht nur die Kriterien für die vorherige Klassifizierung nicht mehr erfüllt sind, sondern wenn auch die Kriterien für die neue Klassifizierung explizit erfüllt sind.

5. Verfahren nach einem der vorhergehenden Ansprüche, **dadurch gekennzeichnet, dass** für den Fall, dass die Überprüfung ergibt, dass die vorherige Klassifizierung nicht mehr zutrifft, insbesondere mit einem Wechsel von einem Manuell-Steuergerät in ein Automatik-Steuergerät, das Kochgerät (13) in einen Sicherheitsmodus umgeschaltet wird, wobei vorzugsweise eine gerade betriebene und von dem externen Steuergerät (25, 125) gesteuerte Heizeinrichtung (22) in ihrer Leistung reduziert wird, vorzugsweise auf maximal 20% ihrer Maximalleistung, insbesondere ganz abgeschaltet wird.

6. Verfahren nach einem der vorhergehenden Ansprüche, **dadurch gekennzeichnet, dass** für den Fall, dass das externe Steuergerät (25, 125) als Automatik-Steuergerät klassifiziert ist, die Kochgerätsteuerung (17) Zusatzinformationen abfragt, um eine Art einer Temperaturregelung des externen Steuergeräts zu ermitteln und zu überprüfen, vorzugsweise um abzufragen, ob es sich bei dem Betrieb der Heizeinrichtung (22) des Kochgeräts (13) um einen Kochprozess oder um einen Bratprozess handelt bzw. welches eine gewünschte Soll-Temperatur für die Temperaturregelung ist, wobei insbesondere Zusatzinformationen während des laufenden Betriebs der Heizeinrichtung abgeglichen werden, vorzugsweise eine Temperaturinformation mit einem Temperaturfühler an der Heizeinrichtung oder für die Heizeinrichtung.

7. Verfahren nach einem der vorhergehenden Ansprüche, **dadurch gekennzeichnet, dass** das externe Steuergerät (25, 125) eine nachträglich anbindbare Bedienerschnittstelle ist, die vorzugsweise mittels einer Funkstrecke mit der Kochgerätsteuerung (17) verbunden ist, wobei insbesondere das externe Steuergerät (125) als Fernbedienung einen Temperatursensor (135) aufweist und selbst an einem Kochgeschirr (30) angeordnet ist oder in ein Kochgeschirr integriert ist, wobei vorzugsweise das externe Steuergerät (125) eine Temperaturregelung des Kochgeschirrs (30) übernimmt und dazu der Kochgerätsteuerung (17) eine Leistungsregelung für die Heizeinrichtung (22) dieses Kochgeschirrs (30) vorgibt.

8. Verfahren nach einem der Ansprüche 1 bis 6, **dadurch gekennzeichnet, dass** das externe Steuergerät ein mobiles Endgerät (25) ist wie ein Smartphone oder ein Tablet-Computer, wobei vorzugsweise das mobile Endgerät (25) direkt oder über eine darauf laufende App eine Temperaturregelung durchführt zur Vorgabe einer Heizleistung für die Heizeinrichtung (22) mittels Steuerbefehlen, wobei insbesondere das mobile Endgerät mittels einer Funkstrecke mit WLAN, Zigbee, Bluetooth oder BLE mit der Kochgerätsteuerung (17) verbunden ist.

9. Verfahren nach einem der vorhergehenden Ansprüche, **dadurch gekennzeichnet, dass** für den Fall, dass das externe Steuergerät (25, 125) als ein Manuell-Steuergerät klassifiziert ist und dies auch nach jeder Überprüfung noch zutrifft, keine Einschränkungen oder Änderungen an den von dem externen Steuergerät gegebenen Steuerbefehlen vorgenommen wird.

10. Verfahren nach einem der vorhergehenden Ansprüche, **dadurch gekennzeichnet, dass** bei der laufenden oder in Intervallen erfolgenden Überprüfung, ob die Klassifizierung noch zutrifft, ein Temperaturwert des mit der Heizeinrichtung (22) beheizten Kochgeschirrs (30) abgefragt wird und die Kochgerätsteuerung (17) überprüft, ob dieser Temperaturwert mit der bisher an die Heizeinrichtung für das Kochgeschirr gegebenen Heizenergie übereinstimmt.

11. Verfahren nach einem der vorhergehenden Ansprüche, **dadurch gekennzeichnet, dass** im Fall einer Klassifizierung als ein Automatik-Steuergerät bei Abbruch einer Kommunikation mit dem externen Steuergerät (25, 125) eine von dem externen Steuergerät gerade betriebene Heizeinrichtung (22) in ihrer Leistung reduziert wird, vorzugsweise auf maximal 20% ihrer Maximalleistung, insbesondere abgeschaltet wird.

12. Verfahren nach einem der vorhergehenden Ansprüche, **dadurch gekennzeichnet, dass** im Fall einer Klassifizierung als ein Manuell-Steuergerät bei Abbruch einer Kommunikation mit dem externen Steuergerät (25, 125) eine von dem externen Steuergerät gerade betriebene Heizeinrichtung (22) weiterbetrieben wird, vorzugsweise unverändert weiterbetrieben wird.

13. System (11, 111) aufweisend ein Kochgerät (13) mit mindestens einer Heizeinrichtung (22) und einer internen Kochgerätsteuerung (17) und ein externes Steuergerät (25, 125), wobei die Kochgerätsteuerung dazu ausgebildet ist, ein Verfahren nach einem der vorhergehenden Ansprüche auszuführen, **dadurch gekennzeichnet, dass** das externe Steuergerät (25, 125) zur Anordnung außerhalb des Kochgeräts (13) ausgebildet ist und dazu ausgebildet ist, Steuerbefehle an die Kochgerätsteuerung (17) zur Steuerung mindestens der Heizeinrichtung (22) zu geben.

## Claims

1. Method for controlling a cooking appliance (13) using an external control device (25, 125), wherein:
- the cooking appliance (13) has at least one heating device (22) and an internal cooking appliance controller (17),
- the external control device (25, 125) is arranged outside said cooking appliance (13),
- the external control device (25, 125) provides said cooking appliance controller (17) with control commands for controlling at least said heating device (22),
- the external control device (25, 125) is classified by said cooking appliance controller (17) either as an automatic control device or as a manual control device,
- in case of an automatic control device, an automatic program runs on the external control device (25, 125) which specifies either particular temperature profiles or power profiles by means of automatic control commands,
- in case of a manual control device, an operator inputs or specifies manual control commands at the manual control device directly as a power setting or a timer input for the heating device (22), wherein any power change is manually or explicitly specified by an operator,
- following said classification, said control commands from said external control device (25, 125) are implemented by said cooking appliance controller (17),
- a check is carried out continuously or at intervals during operation of said cooking appliance (13), in order to determine whether said classification still applies,
**characterized in that**
during the check whether said classification still applies, a frequency of a power adjustment is captured for said heating device (22), wherein in case that said power is changed more than three times per minute, said classification is changed from a manual control device to an automatic control device,
or **in that** during the check whether said classification still applies, it is captured whether a power adjustment by said external control device (25, 125) is either at irregular intervals of time or at regular intervals of time or with integer multiples of a particular time unit, wherein said external control device is classified as a manual control device in said first case and is classified as an automatic control device in said second case.

2. Method according to Claim 1, **characterized in that** before said classification by said cooking appliance controller (17), said external control device (25, 125) transmits an item of classification information to said cooking appliance controller, which information identifies said external control device as an automatic control device or as a manual control device, wherein preferably said cooking appliance controller also uses further information as a criterion for said classification from a group of: type of control commands, frequency of said control commands, continuity or consistency of said control commands.

3. Method according to Claim 1 or 2, **characterized in that**, if said check reveals that the previous classification still applies, operation of said cooking appliance (13) and of said heating device (22) of said cooking appliance, which are controlled by said external control device (25, 125), is continued as before, wherein preferably control commands for changing power generation at said heating device are accepted and implemented without change by said cooking appliance controller (17).

4. Method according to any of the preceding claims, **characterized in that**, if said check reveals that the previous classification no longer applies, a reclassification is carried out, preferably only when not only said criteria for said previous classification are no longer satisfied but also when said criteria for said new classification are explicitly satisfied.

5. Method according to any of the preceding claims, **characterized in that**, if said check reveals that the previous classification no longer applies, in particular with a change from a manual control device to an automatic control device, said cooking appliance (13) is changed over to a safety mode, wherein preferably the power of a heating device (22) currently operated and controlled by said external control device (25, 125) is reduced in its power, preferably to a maximum of 20% of its maximum power, in particular is completely switched off.

6. Method according to any of the preceding claims, **characterized in that**, if said external control device (25, 125) is classified as an automatic control device, said cooking appliance controller (17) requests additional information in order to determine and check a type of temperature control by said external control device, preferably in order to request if the operation of the heating device (22) of the cooking appliance (13) is a boiling process or a roasting process or what is a desired setpoint temperature for the temperature control, wherein in particular additional information is compared during ongoing operation of the heating device, preferably an item of temperature information is compared with a temperature probe on said heating device or for said heating device.

7. Method according to any of the preceding claims, **characterized in that** said external control device (25, 125) is a user interface which can be subsequently connected and preferably is connected to said cooking appliance controller (17) by means of a radio path, wherein in particular said external control device (125) has a temperature sensor (135) as a remote control and is itself arranged on a cookware (30) or is integrated in a cookware, wherein preferably said external control device (125) controls the temperature of said cookware (30) and, for said purpose, specifies power control for said heating device (22) of said cookware (30) to said cooking appliance controller (17).

8. Method according to any of the claims 1 to 6, **characterized in that** said external control device is a mobile terminal (25) such as a smartphone or a tablet computer, wherein preferably said mobile terminal (25) controls a temperature directly or via an app running on it for a purpose of specifying a heating power for said heating device (22) by means of control commands, wherein in particular said mobile terminal is connected to the cooking appliance controller (17) by means of a radio transmission path including WLAN, Zigbee, Bluetooth or BLE.

9. Method according to any of the preceding claims, **characterized in that**, if said external control device (25, 125) is classified as a manual control device and this also still applies after each said check, no restrictions or changes are made to said control commands given by said external control device.

10. Method according to any of the preceding claims, **characterized in that**, during said continuous check or said check carried out at intervals in order to determine whether said classification still applies, a temperature value of the cookware (30) heated with said heating device (22) is queried and said cooking appliance controller (17) checks whether said temperature value corresponds to the heating energy previously given to said heating device for said cookware.

11. Method according to any of the preceding claims, **characterized in that**, if classified as an automatic control device, upon abortion of communication with the external control device (25, 125) a heating device (22) currently operated by the external control device is reduced in its power, preferably to a maximum of 20% of its maximum power, in particular is completely switched off.

12. Method according to any of the preceding claims, **characterized in that**, if classified as a manual control device, upon abortion of communication with the external control device (25, 125) a heating device (22) currently operated by the external control device is continued to be operated, preferably is continued to be operated without a change.

13. System (11, 111), comprising a cooking appliance (13) having at least one heating device (22) and an internal cooking appliance controller (17) and an external control device (25, 125), wherein the cooking appliance controller is configured to carry out a method according to any of the preceding claims, **characterized in that** the external control device (25, 125) is designed to be arranged outside said cooking appliance (13) and is designed to give said cooking appliance controller (17) control commands for controlling at least said heating device (22).

## Revendications

1. Procédé de commande d'un appareil de cuisson (13) au moyen d'un appareil de commande externe (25, 125), dans lequel :
- l'appareil de cuisson (13) présente au moins un dispositif chauffant (22) et un contrôleur d'appareil de cuisson interne (17),
- l'appareil de commande externe (25, 125) est agencé au dehors de l'appareil de cuisson (13),
- l'appareil de commande externe (25, 125) donne des commandes de contrôle au contrôleur d'appareil de cuisson (17) pour commander au moins le dispositif chauffant (22),
- l'appareil de commande externe (25, 125) est classé par le contrôleur d'appareil de cuisson (17) soit en tant qu'un appareil de commande automatique soit en tant qu'un appareil de commande manuelle,
- en cas d'un appareil de commande automatique un programme automatique se déroule sur l'appareil de commande externe (25, 125), ledit appareil définit ou bien des profils de température ou des profils de puissance particuliers par des commandes de contrôle automatiques,
- en cas d'un appareil de commande manuelle un opérateur entre ou définit des commandes de contrôle manuelles à l'appareil de commande manuelle directement en tant que réglage de puissance ou entrée de minuterie pour le dispositif chauffant (22), dans lequel tout changement de puissance est défini manuellement ou explicitement par un opérateur,
- suivant à la classification les commandes de contrôle de l'appareil de commande externe (25, 125) sont mises en œuvre par le contrôleur d'appareil de cuisson (17),
- une vérification, si la classification s'applique encore, est effectuée en permanence ou à intervalles pendant un fonctionnement de l'appareil de cuisson (13),
**caractérisé en ce que**
pendant la vérification, si la classification s'applique encore, une fréquence d'un ajustement de puissance du dispositif chauffant (22) est détectée, dans lequel en cas que la puissance est modifiée plus que trois fois par minute, la classification est changée d'un appareil de commande manuelle à un appareil de commande automatique,
ou **en ce que** pendant la vérification, si la classification s'applique encore, si un ajustement de puissance par l'appareil de commande externe (25, 125) a lieu ou bien à des intervalles irréguliers ou bien à des intervalles réguliers ou plutôt à des entiers multiples d'une unité de temps particulière, dans lequel l'appareil de commande externe dans le premier cas est classifié en tant qu'un appareil de commande manuelle ou dans le deuxième cas est classifié en tant qu'un appareil de commande automatique.

2. Procédé selon la revendication 1, **caractérisé en ce que** l'appareil de commande externe (25, 125) avant la classification par le contrôleur d'appareil de cuisson (17) transmet une information de classification au contrôleur d'appareil de cuisson pour identifier l'appareil de commande externe en tant qu'un appareil de commande automatique ou en tant qu'un appareil de commande manuelle, dans lequel de préférence le contrôleur d'appareil de cuisson utilise encore d'autres informations en tant que critère pour la classification dans le groupe : type de commandes de contrôle, fréquence de commandes de contrôle, continuité ou consistance des commandes de contrôle.

3. Procédé selon la revendication 1 ou 2, **caractérisé en ce que**, dans le cas que la vérification révèle que la classification précédente s'applique encore, un fonctionnement de l'appareil de cuisson (13) ou bien du dispositif chauffant (22) de l'appareil de cuisson commandés par l'appareil de commande externe (25, 125) est poursuivi comme avant, dans lequel de préférence des commandes de contrôle à un changement d'une production de puissance au dispositif chauffant sont prises inchangées et mises en œuvre par le contrôleur d'appareil de cuisson (17).

4. Procédé selon l'une quelconque des revendications précédentes, **caractérisé en ce que**, dans le cas que la vérification révèle que la classification précédente ne s'applique plus, une reclassification est effectuée, de préférence seulement dans le cas lorsque les critères pour la classification précédente ne s'appliquent plus mais encore lorsque aussi les critères pour la classification nouvelle sont remplis explicitement.

5. Procédé selon l'une quelconque des revendications précédentes, **caractérisé en ce que**, dans le cas que la vérification révèle que la classification précédente ne s'applique plus, en particulier avec un change d'un appareil de commande manuelle à un appareil de commande automatique, l'appareil de cuisson (13) est commuté à un mode de sécurité, dans lequel de préférence un dispositif chauffant (22) actuellement en fonctionnement et commandé par l'appareil de commande externe (25, 125) est réduit en puissance, de préférence à 20 % au maximum de sa puissance maximale, en particulier est éteint complètement.

6. Procédé selon l'une quelconque des revendications précédentes, **caractérisé en ce que**, dans le cas que l'appareil de commande externe (25, 125) est classifié en tant qu'un appareil de commande automatique, le contrôleur d'appareil de cuisson (17) requête des informations supplémentaires afin de déterminer une manière de régulation de température de l'appareil de commande externe et de vérifier, de préférence de requêter, si le fonctionnement du dispositif chauffant (22) de l'appareil de cuisson (13) est un processus de cuisson ou un processus de rôtissage ou bien quelle est une température préréglée désirée pour la régulation de température, dans lequel en particulier des informations supplémentaires sont ajustées pendant le fonctionnement du dispositif chauffant en cours, de préférence une information de température avec un capteur de température sur le dispositif chauffant ou pour le dispositif chauffant.

7. Procédé selon l'une quelconque des revendications précédentes, **caractérisé en ce que** l'appareil de commande externe (25, 125) est une interface opérateur qui peut être placée ultérieurement, l'interface raccordée au contrôleur d'appareil de cuisson (17) de préférence au moyen d'un trajet radio, dans lequel en particulier l'appareil de commande externe (125) comme télécommande présente un capteur de température (135) et l'appareil de commande même est arrangé sur un ustensile de cuisine (30) ou intégré dans un ustensile de cuisine, dans lequel de préférence l'appareil de commande externe (125) prend une régulation de température de l'ustensile de cuisine (30) et à cet effet impose une régulation de puissance pour le dispositif chauffant (22) de cet ustensile de cuisine (30) au contrôleur d'appareil de cuisson (17).

8. Procédé selon l'une quelconque des revendications 1 à 6, **caractérisé en ce que** l'appareil de commande externe est un terminal mobile (25) telle qu'un smartphone ou un ordinateur tablette, dans lequel de préférence le terminal mobile (25) effectue une régulation de température directement ou par une App fonctionnant sur le terminal pour spécifier une puissance de chauffe pour le dispositif chauffant (22) au moyen de commandes de contrôle, dans lequel en particulier le terminal mobile est raccordé au contrôleur d'appareil de cuisson (17) par un trajet de transmission radio avec WLAN, Zigbee, Bluetooth ou BLE.

9. Procédé selon l'une quelconque des revendications précédentes, **caractérisé en ce que**, dans le cas que l'appareil de commande externe (25, 125) est classifié en tant qu'un appareil de commande manuelle et ce fait s'applique plus après chaque vérification, pas de limitations ou changements sont effectués aux commandes de contrôle donnés par l'appareil de commande externe.

10. Procédé selon l'une quelconque des revendications précédentes, **caractérisé en ce que** pendant la vérification effectuée en permanence ou à intervalles, si la classification s'applique encore, une valeur de température de l'ustensile de cuisine (30) chauffé par le dispositif chauffant (22) est récupérée et le contrôleur d'appareil de cuisson (17) vérifie si cette valeur de température correspond à l'énergie thermique fourni à présent au dispositif chauffant pour l'ustensile de cuisine.

11. Procédé selon l'une quelconque des revendications précédentes, **caractérisé en ce que**, dans le cas d'une classification en tant qu'un appareil de commande automatique lors d'une interruption de communication avec l'appareil de commande externe (25, 125) un dispositif chauffant (22) actionné actuellement par l'appareil de commande externe est réduit en puissance, de préférence à 20 % au maximum de sa puissance maximale, en particulier est éteint complètement.

12. Procédé selon l'une quelconque des revendications précédentes, **caractérisé en ce que**, dans le cas d'une classification en tant qu'un appareil de commande manuelle lors d'une interruption de communication avec l'appareil de commande externe (25, 125) un dispositif chauffant (22) actionné actuellement par l'appareil de commande externe continue en fonctionnement, de préférence continue en fonctionnement sans changement.

13. Système (11, 111) comprenant un appareil de cuisson (13) avec au moins un dispositif chauffant (22) et un contrôleur d'appareil de cuisson interne (17) et un appareil de commande externe (25, 125), dans lequel le contrôleur d'appareil de cuisson est configuré pour exécuter un procédé selon l'une quelconque des revendications précédentes, **caractérisé en ce que** l'appareil de commande externe (25, 125) est configuré pour l'agencement au dehors de l'appareil de cuisson (13) et est configuré pour donner des commandes de contrôle au contrôleur d'appareil de cuisson (17) pour commander au moins le dispositif chauffant (22).
